# EUROPEAN PATENT SPECIFICATION

(11) **EP 2 173 194 B1**
(45) Date of publication and mention of the grant of the patent: **21.09.2011**
(21) Application number: 08766211.0
(22) Date of filing: 11.06.2008
(51) Int. Cl.: A23L 1/222, A23L 1/22, A23L 1/221, A23L 1/30

(54) **NANOEMULSION AND NANOPARTICLE CONTAINING PLANT ESSENTIAL OIL AND METHOD OF PRODUCTION THEREOF**
NANOEMULSION UND NANOPARTIKEL, DIE ÄTHERISCHE PFLANZENÖLE ENTHALTEN, UND VERFAHREN ZU IHRER HERSTELLUNG
NANOÉMULSION ET NANOPARTICULE CONTENANT DE L'HUILE ESSENTIELLE VÉGÉTALE ET PROCÉDÉ DE PRODUCTION

(30) Priority: 06.08.2007 KR 20070078358
(43) Date of publication of application: 14.04.2010
(73) Proprietor: Korea Food Research Institute, Songnam-si, Gyeonggi-do (KR)
(72) Inventor: KIM, Chong Tai, Yongin-si Gyeonggi-do 448-162 (KR); KIM, Chul Jin, Seongnam-si Gyeonggi-do 463-941 (KR); CHO, Yong Jin, Seoul 138-170 (KR); CHOI, Sung Wook, Suwon-si Gyeonggi-do 440-200 (KR); CHOI, Aei Jin, Suwon-si Gyeonggi-do 440-200 (KR)
(74) Representative: Engelhard, Markus
(86) International application number: PCT/KR2008/003249
(87) International publication number: WO 2009/020280

(56) References cited:
- KR-A- 947 000 045
- US-A- 4 284 630
- US-A- 4 770 892
- US-A- 5 082 684
- US-B2- 6 562 356
- US-B2- 7 105 181

## Description

### [Technical Field]

The present invention relates to a nano emulsion and a nano particle containing plant essential oil, and more specifically to a nano emulsion improving stability and internal availability in functional components by making plant essential oil, which provides physiological activities, into a nano emulsion using emulsifier and water soluble biopolymer, a nano particle capable of imparting stability in the nano emulsion, and a method of production thereof.

### [Background Art]

Plant essential oil generally means volatile materials separated from plants with aroma by a physical method. The most generally used method in separation of plant essential oil is a steam distillation method. The steam distillation method means a method that heats and refluxes raw materials containing a fraction of plant essential oil to a temperature above a boiling point of solvent using water or organic solvent making it possible to obtain fractions with different molecular weights according to the difference in the boiling point. Such a plant essential oil has plenty of uses. In other words, the plant essential oil has been used as various purposes, such as compositions using its antibiosis and antifungal, a use in extermination of insects, a use in aroma therapy, or the like (Wang L., Li., Zhang G. Dong J. and Eastoe J. (2007) Oil-in-water nano emulsions for pesticide formations. J. Colloid Interface Sci. 314(1):230-235).

Recently, several functional foods have been spotlighted. The functional food means a group of food enhancing a biological function in addition to a nourishment function or a taste function of food. Generally, the functional food may be defined as a group of food that effectively affects personal health, physical exercise capacity, mental state, and nourishment when ingesting them to sufficiently reveal a biological regulation function for a living body, such as disease prevention and therapy, etc. In particular, the essential oil components of spice have been many spotlighted recently. The most widely used ones in Korea of spices include capsicum annum L., Alliul sativum L., Zingiber officinale, Allium capa, or the like. It has scientific evidence that the spicy components of the spices provide physiological activities (Srinivasan, K. (2005) Spices as influencers of body metabolism: an overview of three decades of research. Food Research International 38: 77-86). As a result, one of main concerns in a field of a functional food material industry is to find physiological materials using spices as raw materials. Capsaicin, allyl sulfide, dially sulfide, diallyl disulfide, etc. of the essential oil components of the spices have been known as components providing effective physiological activities (Srinivasan K. (2005) Spices as influencers of body metabolism: an overview of three decades of research. Food Research International 38: 77-86). The availability and the utilization technology thereof as the physiological activation compounds are increasing in the food field. Capsaicin is contained by about 0.5% in Capsicum annuum L. in a form of a capsaicin homologue, wherein Capsicum annuum L. is a spice which has been most widely used in Korea in order to regulate a spicy taste of food. It has been found that the capsaicin provides various physiological activations, such as energy metabolic acceleration action, anti-oxidation activity, improvement action of lipid profile in blood, immunoregulation action, anti-cancer activity, regulation action of gene expression, improvement action of appetite, sialorrhea acceleration action, acceleration action of enteral peristaltic movement, degradation action of sodium chloride ingestion, vasodilation and vasoconstriction action by Ca²⁺, acceleration action of gastric secretion, increase action of calcium absorption rate, cholesterol reduction, antihypertension, etc. (Surh Y. J., Lee R. C., Park K. K., Mayne S. T., Liem A. & Miller J. A. (1995) Chemoprotective effects of capsaicin and diallyl sulfide against mutagenesis or tumorigenesis by vinyl carbomate and N-nitrosodimethylamine. Carcinogenesis 16: 2467-2471; Yu R., Choi M. A., Kawada T., Kim B. S., Han I. S. & Yoo H. (2002) Inhibitory effect of capsaicin against carcinogen-induced oxidative damage in rats. Journal of Food Science Nutrition 7: 67-71; Lejeune M. P. G., Kovacs E. M. R., & Westerterp-Pantenga M. S. (2003) Effect of capsaicin on substrate oxidation and weight maintenance after modest body-weight loss in human subjects. The British journal of nutrition 90: 651-659; Asai A., Nakagawa K., & Miyanawa T. (1999) Antioxidant effects of turmeric, rosemary and capsicum extracts on membrane phospholipid peroxidation and liver lipid metabolism in mice. Bioscience, Biotechnology, and Biochemistry 63: 2118-2122; Reilly C. A., Ehlhardt, W. J., Jackson, D. A., Kulanthaivel, P., Mutlib, A. E., Espina, R. J., Moody, D. E., Crouch, D. J., & Yost, G. S. (2003) Metabolism of capsaicin by cytochrom P450 prepares novel dehydrogenated metabolites and decrease cytotoxicity to lung and liver cells. Chemical Research in Toxicology 16: 336-339; Henry C. J. & Emery, B. (1986) Effect of spiced food on metabolic rate. Human Nutrition. Clinical Nutrition 40: 165-168; Tanaka N. (2001) Nonirritating skin care compositions containing capsaicinoids for atopic dermatitis and controlling pruritus in rough skin. Japanese Kokai Tokkyo Koho 8: 2000-2013; Molina-Torres J., Garcia-Chavez A., & Ramirez-Chavez, E. (1999) Antimicrobial properties of alkamides present in flavoring plants traditionally used in Mesoamerica: Affinin and capsaicin. Journal of Ethnopharmacology 64: 241-248). Also, it has been found in late 1940's that capsaicin provides a strong stimulus at first but performs analgesic action anodyne with the passage of time. Thereafter, a study for developing a new anodyne by synthesizing capsaicin derivatives has been progressed. Allyl sulfide, which is a colorless liquid giving out a spicy smell, is not well melted in water, while it is mixed with an organic solvent, for example, alcohol or ether. It has been known that diallyl disulfide has excellent effects of bactericidal action, antimicrobial action, and an improvement of blood circulation, and a prevention of adult disease (Marti'nez M. C., Corzo N., and Villamiel M. (2007) Biological properties of onions and garlic. Trends in Food Science & Technology 18: 609-625). Allysine, which is main component generating the unique smell and the effect of a medicine of Alliul sativum L., does not exist in Alliul sativum L. in a natural state; however, if Alliul sativum L. is damaged, alin is converted into allysine by an enzyme called allinase. In particular, since it has been found that allysine can perform a role of antioxidant, it has been spotlighted (Marti'nez M. C., Corzo N., & Villamiel M. (2007) Biological properties of onions and garlic. Trends in Food Science & Technology 18: 609-625). However, since allysine is not melted in water, it has difficulty producing as a product that can be easily ingested and since it has a strong intestinal stimulus effect and has a unique and strong flavor, it is difficult to apply to food by a general method.

One of methods of stabilizing materials being not melted in water and increasing the absorptance thereof makes them into an emulsion. The emulsion means a system that one liquid made of a fine particle is dispersed in another liquid. When an emulsion is generated from water and oil, it is largely divided into an oil-in-water type (O/W) that oil is dispersed in water and a water-in-oil type (W/O) that water is dispersed in oil. The emulsion of water and oil is formed by strongly shaking and mixing a mixture of water and oil. Such an emulsion is unstable. The unstable factors of the emulsion includes three types, that is, flocculation that forms an agglomerate of particle, creaming that maintains a mixture in a separated state and concentrates particles at the surface or the bottom of an emulsion according to the relative density of two systems, and coalescence of particles.

Emulsifier is used to stabilize the emulsion. Most emulsifiers are surfactant. A food emulsion can generally be prepared by applying mechanical energy or ultrasonic energy to a mixture made of oil, water, and emulsifier, wherein it has been known that this emulsion is opaque and has stability for a predetermined period but has a thermodynamically unstable feature so that it dose not have stability for a long time.

In producing an emulsion in a field of food industry, another problem is a restriction of usable emulsifier. In other words, many emulsifiers are not permitted to be used for food and some permitted emulsifiers can be used only at very low concentration. Furthermore, in the case of soybean oil that has been mainly used as emulsifier for producing an emulsion in food industry, it has an disadvantage that it is difficult to melt glyceride being long chain fatty acid much included in the soybean oil, as compared to short chain or medium chain fatty acid.

### [Disclosure]

### [Technical Problem]

Therefore, it is an object of the present invention to provide a nano emulsion capable of stabilizing functional components in food and maximizing internal resorption based on materials suitable for food and a method of production thereof.

It is another object of the present invention to provide a nano emulsion capable of reducing the strong intestinal effect and flavor of the functional components in food and a method of production thereof.

It is still another of the present invention to provide a nano particle capable of being preserved for a long time and being easier applied to other food by a further increase of the stability of the functional components in food and a method of production thereof.

### [Technical Solution]

To achieve the objects, there is provided a nano emulsion capable of reducing an intestinal stimulus effect by hydrophilic biopolymer simultaneously with increasing the stability and absorptance of the functional components in food by making the functional components in food into a nano emulsion using emulsifier and the hydrophilic biopolymer, a nano particle capable of further increasing the stability by performing solvent precipitation or vacuum freeze drying on the nano emulsion and capable of being easily applied to other foods in a powder form from the nano emulsion, and a method of production thereof.

Hereinafter, the present invention will be described in detail.

Nano technology means ultra-fine processing technology producing useful materials in a nano region or developing new materials using new nature and phenomenon, etc. Nano, which is a word derived from nanos meaning a dwarf, is currently used as a unit representing one billionth. The nano technology, which is fine technology beyond micro representing one millionth, finds unique nature or phenomenon of nanometer-sized materials and aligns and combines nano materials to build a new technical region. The nano technology is intensively fostered as a national research topic in advanced countries from 1990's and is one of the most actively researched fields throughout the whole field of science. An attempt to apply the nano technology to food field has been progressed. As a result, the development of nano food, that is, a technical development capable of transferring functional components in food to specific organs in the body simultaneously with maintaining activation until the functional components in food reach a final digestion and absorption stage in the body internationally begins in recent.

Recently, many functional foods have been spotlighted and many functional components providing bioactivation within the functional food have been revealed. An example of the functional components may include carotene, lutein, dietary fiber, flavonoid, vegetable stanol, phytoestrogen, chitosan, chitin, taurine, sesamin, etc., wherein most of them are not melted in water so that it has difficulty producing as a product easy to ingest.

In particular, since the functional components existing in essential oil of spice have various functions with a function as antioxidant at the head, a study thereon has actively been performed. For example, in the case of capsaicin, a study on a change in physiological activation in the body, a change in heart rate, and a change in energy metabolism in a stable state, an exercising state, and a recovering state in after ingesting the capsaicin; an effect on activity of serum creatine phosphokinase (CPK) and lactate dehydrogenase due to administration of capsaicin after swimming training of rats; growth inhibition ability for pathogenic bacteria in food; and an effect of capsaicin on energy metabolism and lipid oxidation in the body, etc. were reported.

A method capable of stabilizing the functional components being not melted in water or increasing its absorption efficiency by an application of nano technology is to prepare a nano emulsion. The nano emulsion has various advantages as compared to an emulsion or a microemulsion.

The emulsion is opaque and the size of its particle is in the range of 0.2 to 0.5µm and the emulsion has stability only for a predetermined period but is thermodynamically unstable, while the nano emulsion is thermodynamically stable and has optical distribution, compared with a general emulsion, so that it shows a transparent solution state and the size of its particle is in the range of 5 to 100nm. Also, the nano emulsion is continuously self-assembled with a hydrophilic or hydrophobic portion to maintain a more stable emulsion state.

Since the particle of the nano emulsion is very small, acceleration of gravity and Brownian motion are remarkably reduced not to lead to creaming or sedimentation phenomenon and coalescence phenomenon, thereby not leading to the separation in a dispersion state. Since the small particle forming the nano emulsion has unchanged nature, occurrence of coalescent phenomenon is suppressed so that surface coalescence is prevented. The nano emulsion makes stability in activation material higher as compared to the existing microemulsion, making it possible to provide an increased effect of internal availability.

The method capable of producing the nano emulsion is known to those skilled in the art. Such a method may include a stirring method, a high pressure homogenization method, an ultra high pressure method, a microchannel passing method, etc. The stirring method can prepare the nano emulsion at low energy. In the high pressure homogenization method, a high-pressure fluid generated due to an operation of a plunger rapidly passes through a small gap at a valve and at the same time, is broken into fine particles with nano size due to cavitations, turbulent flow, and shearing force according to sudden degradation of pressure, thereby making liquid components in a completely uniform state.

The emulsifier is used to prepare the nano emulsion, but the kinds of usable emulsifiers are restricted. The usable emulsifier may include soybean phospholipid (recithin), sucrose fatty acid ester, glycerin fatty acid ester, sorbitan fatty acid ester, polyglycerin fatty acid ester, calcium stearoyl lactylate, etc. There are many cases where the use of emulsifier in food field can be performed only in low concentration. For example, in the case of propylene glycol, 1g or more for food of 1 kg cannot be used. Preferably, the present invention uses sorbitan fatty acid ester as emulsifier.

The sorbitan fatty acid ester, which is non-ion surfactant, is different in nature and utilization according to the kind and number of fatty acid combined with sorbitan and a degree of ester. Sorbitan monoester is being sold. Fatty acid combined with sorbitan includes lauric acid (Tween 20), palmitic acid (Tween 40), stearic acid (Tween 60), and oleic acid (Tween 80). In particular, the present invention preferably uses Tween 60 or Tween 80 as emulsifier. In the case of Tween 20 or Tween 40, this is more suitable for producing a water-in-oil type (W/O) of an emulsion in a chemical structure, but is not suitable for producing an oil-in-water type (O/W) of an emulsion provided in the present invention since the plant essential oil is not well melted in biopolymer and the separation of the emulsions are not easily generated.

One of advantages of the nano emulsion according to the present invention increases the stability of the functional components in food and internal absorption efficiency as well as can be utilized as a new conceptive transporter of the functional components in food by regulating the particle size of the nano emulsion using biopolymer to maintain the activity of the functional components in food until the functional components are transferred to a human organ to be targeted. Preferably, the biopolymer is water soluble. With the water soluble biopolymer, the internal absorption of the functional components in food can be increased and the products easy to ingest can be easier prepared. Water soluble biopolymer coats the plant essential oil having strong acridity to slowly release the components of the essential oil and to show a masking effect, so that a human throat is not stimulated when ingesting it and the intestinal stimulus effect due to the functional components of essential oil included in spices can be reduced and a strong flavor generated when there are only the functional components of essential oil can be reduced to solve reluctance to ingest. The water soluble biopolymer usable in the present invention includes chitosan, alginic acid, cellulose, carrageen an, gelatin, Arabic gum, pectin, guar gum, etc.

Also, with the provision of the nano emulsion containing biopolymer, it is possible to provide functional characteristics, such as antibiosis, ant oxidation, ingest of dietary fiber, etc. provided by biopolymer itself. The water soluble biopolymer of the present invention is used in a solution of 0.05 to 1.0 wt% and is prepared by being melted in distilled water. If the water soluble polymer is added below 0.05 wt%, the reduction of the intestinal stimulus effect and the reduction of the strong flavor of essential oil by the addition of the water soluble polymer is weak and if it is added above 1.0wt%, the particle size of the emulsion becomes too large so that a non-uniform emulsion in a micro unit is formed. In producing the nano emulsion using the water soluble biopolymer as a basic material, three conditions of water base, oil base, and emulsifier, which have a largest effect on the production of the nano emulsion, should be mixed at constant ratio to form a stable emulsion with nano size. In the present invention, the water base is water soluble biopolymer solution, the oil base is plant essential oil, and the emulsifier is Sorbian fatty acid ester.

In the present invention, the mixing ratio of the plant essential oil and the emulsifier is preferably 1:3 to 1:5. When the mixing ratio is 1:1 or 1:2, a secondary particle is formed, an unstable emulsion is formed, particle size exceeds 1000nm, and an oil phase and a water phase are separated from each other. When the mixing ratio exceeds 1:5, the amount of the functional components in the plant essential oil for the emulsifier becomes too small. With the study of the present invention, it can be appreciated that the nano emulsion made of plant essential oil of 0.03 to 0.3wt%, emulsifier of 0.09 to 1.5%, and water soluble biopolymer of 0.05 to 1.0 wt%, and water of the balance has the aforementioned effects.

The nano emulsion of the present invention may be prepared as a double layer and a triple layer in addition to a single layer. The double layer and the triple layer nano emulsion may be prepared by producing the single layer nano emulsion, processing calcium chloride, and adding another water soluble biopolymer, wherein when the calcium chloride is processed, the reaction becomes large so that the double layer nano emulsion is easier prepared. The water soluble biopolymer used when the double layer nano emulsion is prepared preferably has different charges since the encapsulation efficiency of the double layer on the single layer is increased. The double layer nano emulsion is prepared and is then centrifuged to take only supernatant, thereby removing the particles with micro size. The triple nano emulsion is prepared by producing the double layer nano emulsion and then adding another water soluble biopolymer solution. The double layer and triple layer nano emulsions can form a nano emulsion in more stable form and can reduce the absorption and decomposition speed of the functional components in food to increase the internal availability, as compared to the single layer nano emulsion.

In order to apply the nano emulsion of the present invention to food, the nano emulsion is preferably stable for heat treatment since most foods are subjected to heat treatment to be sterilized at a final step of production of food. Also, since a general drink product is regulated and sold in an optimum range of pH 4 to 5, in particular, the nano emulsion is preferably stable in a range of pH of 4 to 5 to apply to the drink product. It can be appreciated that the nano emulsion of the present invention is stable for heat treatment and in the range of the aforementioned pH as shown in the following research results.

The nano emulsion of the present invention is withdrawn by a solvent precipitation method such as ethanol or acetone, etc. or dried by a vacuum freeze drying method so that it can be prepared in a nano particle, wherein the nano particle in a powder form is further increased in stability than the nano emulsion to have advantages that it can be stored for a long time and can be easier applied to several foods (Galindo-Rodriguez S., Allemann E., Fessi H., & Doelker E. (2004) Physicochemical parameters associated with nano particle formation in the salting-out, emulsification-diffusionm and nanoprecipitation methods. Pharmaceutical Research 21: 1428-1439). The nano particle prepared according to the present invention can be sold by being added to a drinking water. According to the research results of the present inventors, since the nanoemulsion prepared according to the present invention has a very transparent red color, the research results show a use possibility of a product capable of meeting the acceptance and satisfaction of consumers when the nano emulsion is used in drink industry. Also, the nano emulsion can be used as seasoning component and can be used as food additive for food, such as various cookies, gum, bread, or butter, etc. Furthermore, since the nano particle of the present invention is prepared from the nano emulsion based on the water soluble biopolymer, when the nano particle is back dispersed in water, it is well melted so that it can be very easily applied to food.

### [Advantageous Effects]

The present invention makes the plant essential oil having many functional components providing bioactivation within functional food into the nano emulsion based on the water soluble biopolymer to maximize the stability and internal absorption of the functional components and reduces a strong flavor capable of being generated when there are the functional components in food, in particular, only essential oil component in spice to solve reluctance to ingestion. Also, the water soluble biopolymer is used a basic material in producing the nano emulsion to reduce the intestinal stimulus effect of essential oil in spice and at the same time, provide functions such as antibiosis, antioxidation, etc. provided by the biopolymer itself. In particular, when the nano emulsion is prepared into the nano particle, the stability can be further increased and the application to other food can be easily made due to a powder form.

### [Description of Drawings]

The above and other objects, features and advantages of the present invention will become apparent from the following description of preferred embodiments given in conjunction with the accompanying drawings, in which:

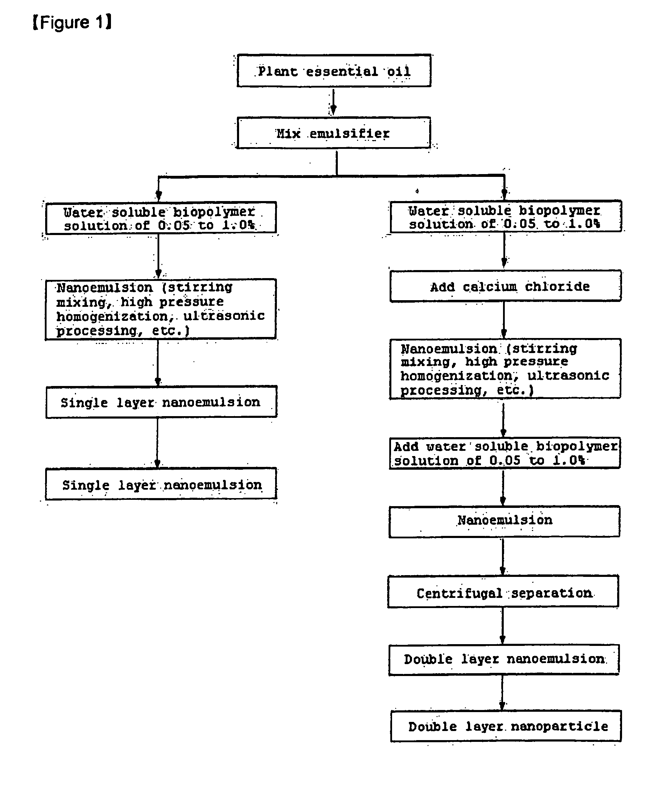

Fig. 1 is a whole flow chart of a method of producing a nano emulsion of the present invention

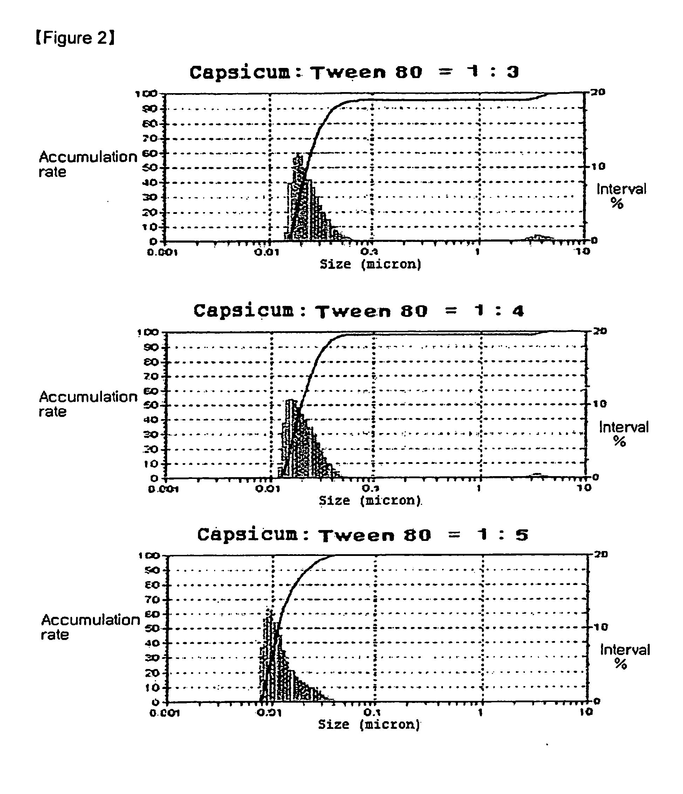

Fig. 2 shows measuring results of a change in particle size of a nano emulsion according to mixing ratio of oleoresin capsicum and Tween 80.

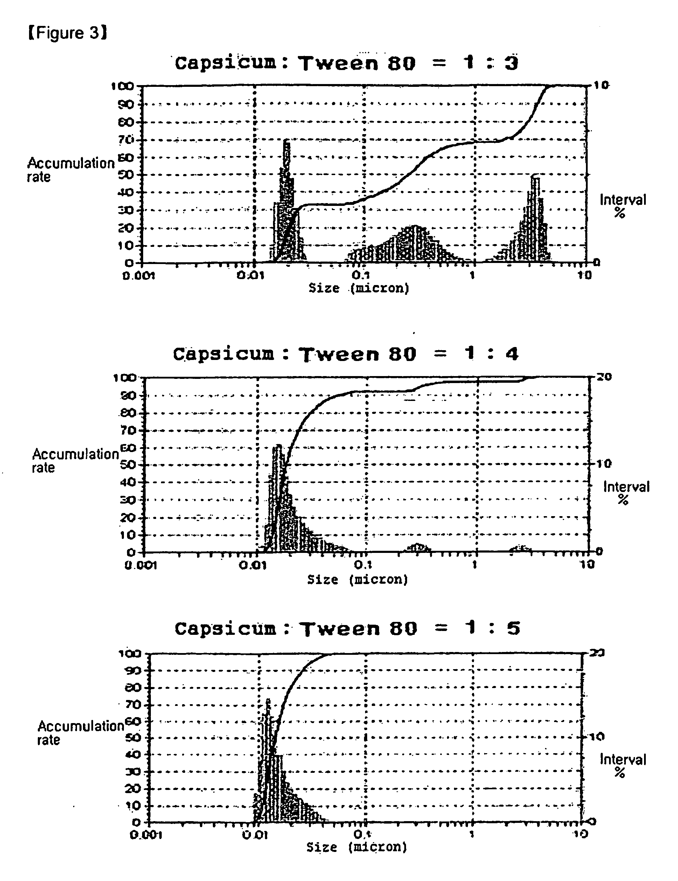

Fig. 3 shows measuring results of a change in particle size of a nano emulsion after heat treatment at 75°C according to mixing ratio of oleoresin capsicum and Tween 80.
Fig. 4 shows measuring results of a change in particle size of a nano emulsion according to addition ratio of oleoresin capsicum and Tween 80.
Fig. 5 shows measuring results of a change in particle size of a nano emulsion according to concentration of chitosan solution.
Fig. 6(a) shows measuring results of a change in viscosity of a nano emulsion according to concentration of chitosan solution and Fig. 6(b) shows measuring results of a change in viscosity of a nano emulsion after heat treatment at 75°C according to concentration of chitosan solution.
Fig. 7 shows measuring results of a change in viscosity and particle size of a nano emulsion according to pH.
Fig. 8 shows measuring results of a change in particle size of a nano emulsion according to heat treatment.
Fig. 9 measuring results of particle size of a nano emulsion prepared using various biopolymers.
Fig. 10 shows an example of a method of production of a double layer nano emulsion and a triple layer nano emulsion.
Fig. 11 shows measuring results of encapsulation efficiency according to concentration of chitosan solution in producing a double layer nano emulsion.
Fig. 12 shows measuring results of a change in particle size according to concentration of chitosan solution in producing a double layer nano emulsion.
Fig. 13 shows measuring results of particle size after remelting a double layer nano particle.

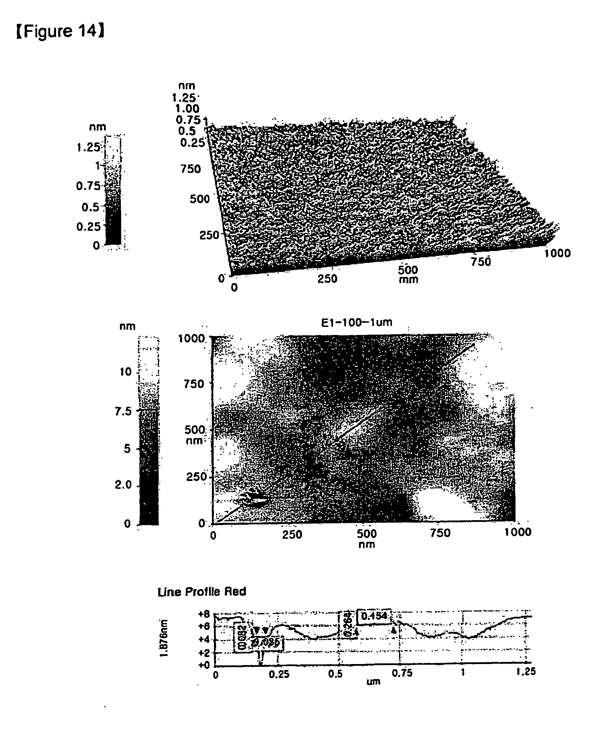

Fig. 14 shows measuring results of an atomic force microscope of a nano emulsion.

### [Best Mode]

Hereinafter, the embodiments of the present invention will be described in detail with reference to accompanying drawings.

Hereinafter, the present invention will be described in detail with reference to embodiments. However, the embodiments are for illustrating the present invention and therefore, the scope of the present invention is not limited thereto.

### [Embodiment 1] Production of nano emulsion

Oleoresin capsicum and Tween 80 were mixed at different mixing ratios (1:3, 1:4, 1:5) and stirred at 150rpm for 3 minutes. Chitosan solution added to the mixing solution at different addition ratios (0.2%, 0.4%, 0.6%, 0.8%, 1.0%) was stirred at the aforementioned speed for 3 minutes and was then reacted within a water bath of 50°C for 1 minute, thereby producing a mixture. This mixture was processed at ultrasonic wave for 3 minutes under conditions of an amplitude in 45%, 30W, and 4°C using an ultrasonic device (sonic dismembrator Model 500, Fisher scientific, USA), thereby producing an oil-in-water type (O/W) of a nano emulsion. Herein, the addition ratio means an added content of oleoresin capsicum and Tween 80 for a whole amount of chitosan solution. For example, the addition ratio 0.4% means an addition of chitosan solution 100ml to oleoresin capsicum:Tween 80=1:4 mixing solution 0.4g. The same as above.

### [Embodiment 2] Measurement of stability of nano emulsion

In order to measure stability of a nano emulsion, particle size and viscosity were measured.

The particle size was measured at 25°C for 5 minutes using a light-scattering particle size analyzer (Nanotrac TM250, Microtrac Inc. USA) capable of measuring size from 3nm to 6µm.

The viscosity was measured by spindle No. 2 using a viscometer (Brookfield DV-II+, Brookfield engineering laboratory Inc., USA) and was represented by a cp value in a range that a torque value is 10% or more by reacting at 20rpm at 25°C for 1 minute.

### [Embodiment 3] Effect according to mixing ratio of oleoresin capsicum/Tween 80

Particle size was measured by the aforementioned method after performing heat treatment at 75°C on the nano emulsions prepared by making mixing ratio of oleoresin capsicum and Tween 80 1:3, 1:4, and 1:5. The size of the nano emulsion was small with the increase of the mixing ratio of Tween 80, but each of the nano emulsions prepared by making mixing ratio of oleoresin capsicum and Tween 80 1:4 and 1:5 was formed as a uniform and stable nano emulsion having size of 52.1nm and 13.32nm.

The stability of the nano emulsion after heat treatment at 75°C for 15 minutes was increased with the increase of the mixing ratio of Tween 80. The particle size of the nano emulsion prepared by making mixing ratio of oleoresin capsicum and Tween 80 1:5 was 16.06nm, but there was little difference between this particle size and the particle size before heat treatment. However, the particle size of the nano emulsion prepared at mixing ratio of 1:3 was largely increased from 220.3nm to 1139nm by the polymerization of polysaccharides.

### [Embodiment 4] Storage stability according to addition ratio of oleoresin capsicum/Tween 80

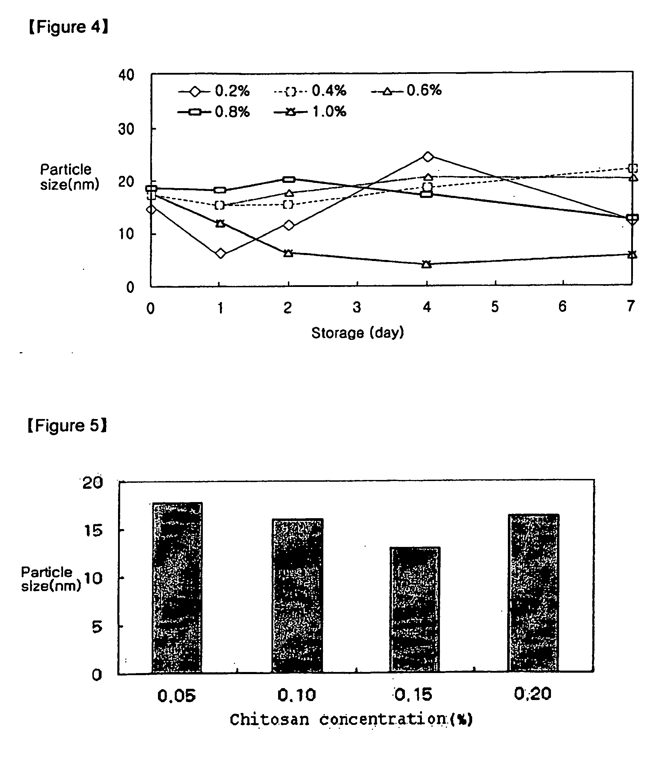

The nano emulsion was prepared by mixing oleoresin capsicum and Tween 80 having mixing ratio of 1:4 with 0.2wt% chitosan solution at addition ratio of 0.2%, 0.4%, 0.6%, 0.8%, and 1.0% and was then stored for 7 days at 25°C. Thereafter, the particle size of the nano emulsion was measured by the aforementioned method. However, at the addition ratio of 0.2% the unstable emulsions were formed and the particle sizes of some nano emulsions ware changed during storage, but at the addition ratio of 0.4% or more the stable emulsions were formed (Fig. 4).

### [Embodiment 5] Effect according to concentration of chitosan solution

The nano emulsion was prepared by mixing oleoresin capsicum and Tween 80 having mixing ratio of 1:4 with 0.05wt% to 0.2wt% chitosan solution at addition ratio of 0.4% and the particle size thereof was measured by the aforementioned method. In forming the nano emulsion, in the range of 0.05 wt% to 0.2 wt% chitosan solution the particle size had little difference as the range of 12.94nm to 17.67nm (Fig. 5).

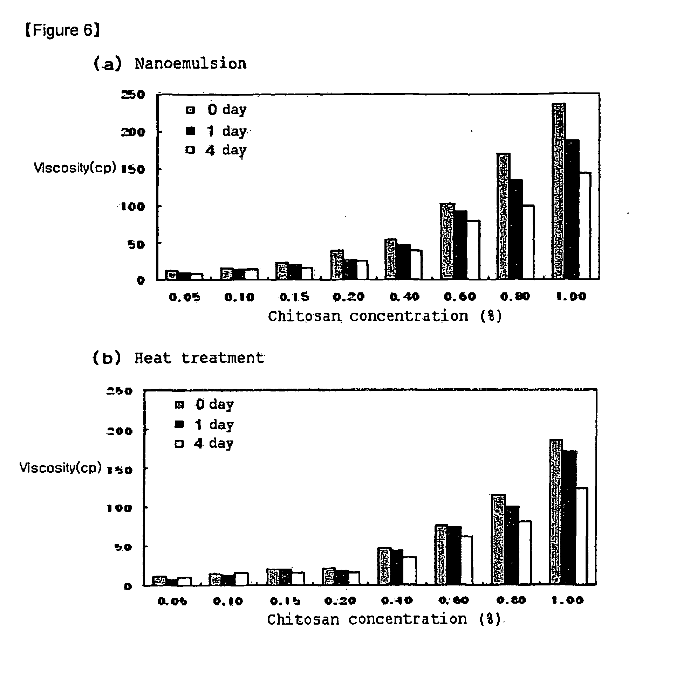

The viscosity after performing heat treatment at 75°C for 15 minutes on the nano emulsion prepared by mixing oleoresin capsicum and Tween 80 having mixing ratio of 1:4 with 0.05wt% to 0.2wt% chitosan solution at addition ratio of 0.4% was measured. As the concentration of chitosan solution was increased, the viscosity of the nano emulsion was reduced and as the storage period was increased, the viscosity thereof was reduced (Fig. 6(a)). With the heat treatment at 75°C for 15 minutes, the viscosity of the nano emulsion was reduced due to the decomposition of polysaccrides (Fig. 6(b)).

### [Embodiment 6] Stability according to pH

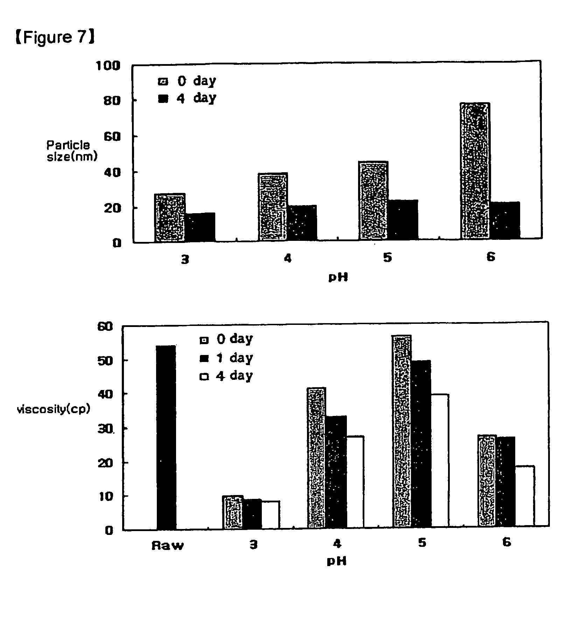

The nano emulsion was prepared by mixing oleoresin capsicum and Tween 80 having mixing ratio of 1:4 with 0.2wt% chitosan solution at addition ratio of 0.4% and then regulating pH to 3, 4, 5, and 6. The particle size and the viscosity of the prepared nano emulsion were measured by the aforementioned method. As pH is increased from 3 to 6, the particle sizes of the nano emulsion were increased, but the particle sizes thereof after 4 days from storage were reduced so that the particle sizes thereof were similar to each other as 15.45nm to 22.53nm. A chemical decomposition of chitosan due to low Ph was estimated as a cause of this result. Also, the change in the particle size was shown correlating with the measuring result of viscosity decreasing with the increase of the storage period (Fig. 7).

### [Embodiment 7] Effect according to heat treatment

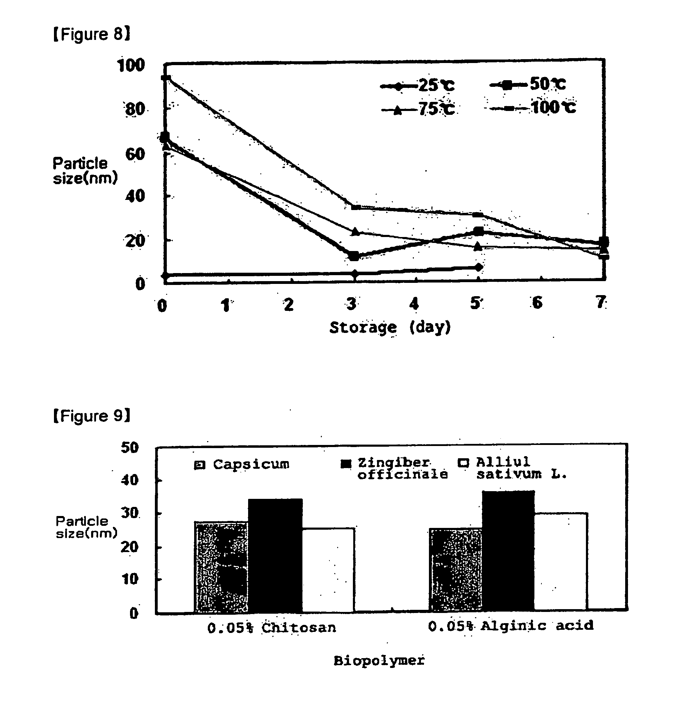

The nano emulsion was prepared by mixing oleoresin capsicum and Tween 80 having mixing ratio of 1:4 with 0.2wt% chitosan solution at addition ratio of 0.4% and was then subjected to heat treatment at 50°C for 15 minutes, 75°C, and 100°C. With the heat treatment at 50°C, 75°C, and 100°C, each of the particle sizes of the nano emulsions was increased to 66.30nm, 63.40nm, and 93.60nm with the increase of temperature (Fig. 8). As a result, in the heat treatment at 50°C or more, it could be confirmed that a micelle structure of the nano emulsion is transformed so that its stability is slightly degraded; however, even in the high-temperature heat treatment, the formation possibility of the nano emulsion of 100nm or less and the use possibility of the nano emulsion for food were shown.

### [Embodiment 8] Production of nano emulsion using various essential oils

The nano emulsion was prepared by 0.05wt% chitosan solution and 0.05wt% alginic acid using Zingiber officinale essential oil and Alliul sativum L. essential oil in addition to oleoresin capsicum. The particle sizes threof were in the range of 24.91 nm to 35.80nm and therefore, the difference in the particle sizes according to each kind is not large (Fig. 9). Therefore, the production possibility of the nano emulsion using the functional components in various food and the hydrophilic biopolymer was confirmed.

### [Embodiment 9] Effect of concentration of chitosan solution in producing double layer and triple layer nano emulsions

In order to prepare the double layer nano emulsion, a mixture of 0.4g formed by mixing oleoresin capsicum and Tween 80 at 1:4 was added to 0.05wt% alginic acid solution (Ph 4.9) of 100ml and they were stirred and mixed at 150rpm for 60 minutes and 18mM CaCl₂ solution of 7.6ml is then added to this mixture and they were stirred and mixed at 150rpm for 60 minutes. 0.05% chitosan solution (pH 4.6) of 25ml was added to this mixture and they were stirred and mixed at 150rpm for two hours, thereby stabilizing the double layer emulsion. In order to remove the emulsion with size of a micro unit, it was centrifuged at 11,000rpm at 4°C for 40 minutes and only supernatant was then taken. In order to define the concentration of alginic acid and chitosan for producing the triple nano emulsion, the nano emulsion was prepared by fixing the concentration of alginic acid to 0.05wt% and differently setting the concentration of chitosan to 0.05 to 0.09wt%. The 0.05wt% alginic acid solution and the 0.05wt% chitosan solution was regulated and prepared to pH4.9 and 4.6, respectively. 0.05wt% alginic acid (pH 4.9) of 117.5ml was added to the mixture of 0.75g of oleoresin capsicum and Tween 80 and they were stirred for 30minutes and 18mM CaCl₂ solution of 7.5ml was then slowly added to this mixture while stirring for one hour, thereby producing alginic acid primary emulsion. 0.05wt% chitosan (pH 4.6) 25ml was slowly added to the prepared primary emulsion while stirring the prepared primary emulsion for one and a half hour. The formed nano emulsion was stirred at a constant speed for 30minutes and was filtered with a filter and was then stabilized for 24 hours at room temperature.

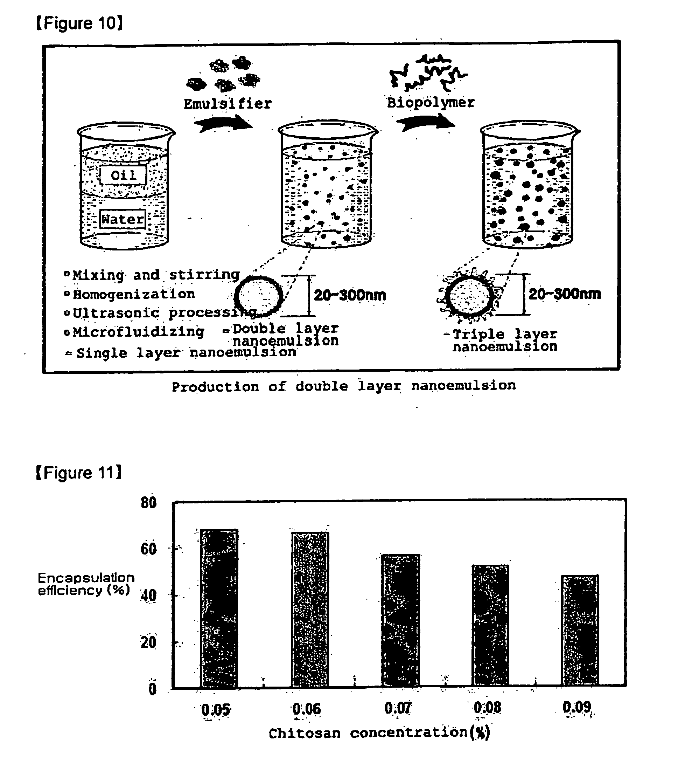

A schematic production process of the double layer and the triple layer was shown in Fig. 10.

The encapsulation efficiency of the chitosan double layer on the alginic acid single layer of the double layer and triple layer nano emulsion prepared as above became highest as 68%. It was observed that as the concentration of chitosan is increased, the encapsulation efficiency was reduced (Fig. 10). The particle size was increased, as the micelle structure of the nano emulsion was broken in more than 0.07% chitosan solution (Fig. 11). Therefore, when using the hydrophilic biopolymer with different charges in producing the double layer nano emulsion, it could be confirmed that the same concentration should be used to form the stable nano emulsion.

### [Embodiment 10] Measurement of stability of nano particle

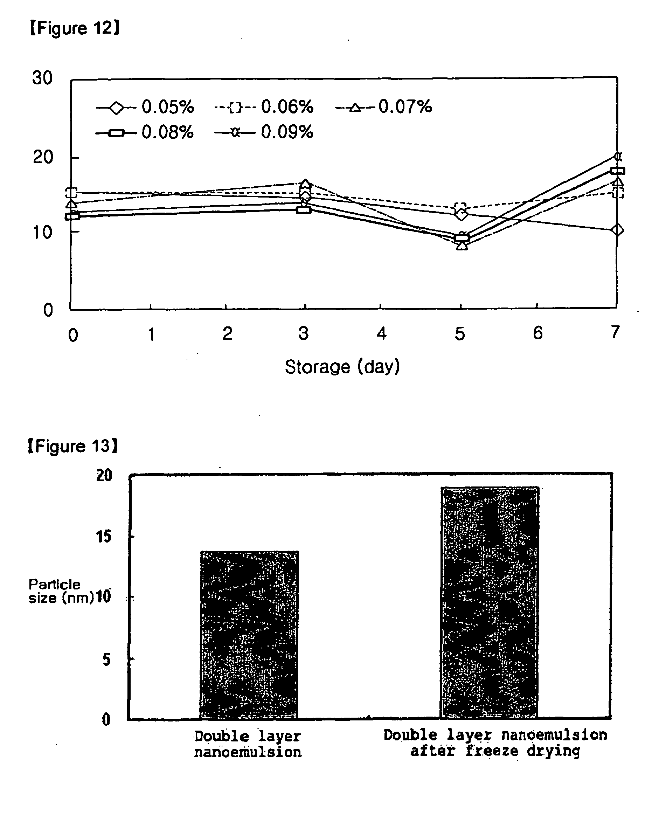

The nano particle was prepared by performing a vacuum freeze drying at - 18°C on the double layer nano emulsion prepared under the conditions of the mixing ratio of 1:4 of oleoresin capsicum and Tween 80 and the addition ratio of 0.4% using 0.05% alginic acid solution and 0.05% chitosan solution. The prepared double layer nano particle of 50mg was stirred and mixed with distilled water of 50ml at 50rpm for 30 minutes and they were remelted and the particle size thereof was then measured (Fig. 12). The measuring result of the particle sizes was slightly increased from 13.71nm to 18.92nm, but it was confirmed that the difference between the particle sizes is not large and the nano emulsion is reformed in a relative stable form.

### [Embodiment 11] Atomic force microscope measurement of nano emulsion

For an atomic force microscope (AFM) measurement, 100µl of the prepared nano emulsion diluted with distilled water was placed on a slide cover glass water and dried it at 25°C for 24 hours. The atomic force microscope used XE-100 available from Park System Inc. and the measurement used a non-contact mode being a tapping mode. To this end, an AFM probe (Nanosensor Inc., elastic constant=42N/m, resonance frequency=320kHz) for a tapping mode, which is being currently sold, was used. The particle size was measured at the measuring speed 0.3Hz, measuring size X scan 1µm × Y scan µm, and a format of image data 256 pixels 256 lines. In order to obtain standardized data for phase delay, the phase delay was initialized using a "zero phase" instruction of the atomic force microscope and was then measured. It was confirmed that the measuring result of the nano emulsion morphology by the atomic force microscope forms a uniform micelle structure (Fig. 13).

Those skilled in the art will appreciate that the conceptions and specific embodiments disclosed in the foregoing description may be readily utilized as a basis for modifying or designing other embodiments for carrying out the same purposes of the present invention. Those skilled in the art will also appreciate that such equivalent embodiments do not depart from the spirit and scope of the invention as set forth in the appended claims.

### [industrial Applicability]

The present invention makes the plant essential oil having many functional components providing bioactivation within functional food into the nano emulsion based on the water soluble biopolymer to maximize the stability and internal absorption of the functional components and reduces a strong flavor capable of being generated when there are the functional components in food, in particular, only essential oil component in spice to solve reluctance to ingestion. Also, the water soluble biopolymer is used a basic material in producing the nano emulsion to reduce the intestinal stimulus effect of essential oil in spice and at the same time, provide functions such as antibiosis, antioxidation, etc. provided by the biopolymer itself. In particular, when the nano emulsion is prepared into the nano particle, the stability can be further increased and the application to other food can be easily made due to a powder form.

## Claims

1. A nano emulsion comprising plant essential oil of 0.03 to 0.3wt%, sorbitan fatty acid ester of 0.09 to 1.5 wt%, water soluble biopolymer of 0.05 to 1.0 wt%, and water of the balance, with respect to the total weight of the nano emulsion.

2. The nano emulsion as set forth in claim 1, wherein the plant essential oil comprises one or more selected from a group consisting of capsicum annum L. essential oil, Allium sativum L. essential oil, Zingiber officinale essential oil, and Allium capa essential oil.

3. The nano emulsion as set forth in claim 1 wherein the water soluble biopolymer comprises one or more selected from a group consisting of chitosan, alginic acid, cellulose, carrageenan, gelatin, arabic gum, pectin, and guar gum.

4. The nano emulsion as set forth in claim 1, wherein the sorbitan fatty acid ester is Tween 60 or Tween 80.

5. A nano particle prepared by performing solvent precipitation or vacuum freeze drying the nano emulsion prepared by any one of claims 1 to 4.

6. A method of production of a single layer nano emulsion comprising the steps of:
adding plant essential oil of 0.03 to 0.3wt% and sorbitan fatty acid ester of 0.09 to 1.5 wt% to water soluble biopolymer of 0.05 to 1.0 wt%;
adding water of the balance; and
making the mixture into a nano emulsion.

7. A method of production of a double layer nano emulsion comprising the steps of:
adding plant essential oil of 0.03 to 0.3wt% and sorbitan fatty acid ester of 0.09 to 1.5 wt% to one water soluble biopolymer of 0.05 to 1.0 wt%;
adding water of the balance;
adding calcium chloride to the mixture;
making the mixture to which the calcium chloride is added into a nano emulsion;
adding another water soluble biopolymer of 0.05 to 1.0 wt% to the nano emulsion and then, making it into a nano emulsion; and
separating emulsions with nano size by centrifuging the nano emulsion.

8. A method of production of a triple layer nano emulsion comprising the steps of:
adding plant essential oil of 0.03 to 0.3wt% and sorbitan fatty acid ester of 0.09 to 1.5 wt% to one water soluble biopolymer of 0.05 to 1.0 wt%;
adding water of the balance;
adding calcium chloride to the mixture;
making the mixture to which the calcium chloride is added into a nano emulsion;
adding another water soluble biopolymer of 0.05 to 1.0 wt% to the nano emulsion and then, making it into a nano emulsion;
adding yet another water soluble biopolymer of 0.05 to 1.0 wt% to the nano emulsion and then, making it into a nano emulsion; and
separating emulsions with nano size by centrifuging the nano emulsion.

9. A nano particle prepared by performing solvent precipitation or vacuum freeze drying the nano emulsion prepared by any one of claims 6 to 8.

## Patentansprüche

1. Nano-Emulsion, umfassend 0,03 - 0,3 Gew.% pflanzliches essentielles Öl, 0,09-1,5 Gew.% Sorbitan-Fettsäureester, 0,05-1,0 Gew.% wasserlösliches Biopolymer und der Rest Wasser, bezogen auf das Gesamtgewicht der Nano-Emulsion.

2. Nano-Emulsion nach Anspruch 1, wobei das pflanzliche essentielle Öl ein oder mehrere pflanzliche essentielle Öle umfasst, ausgewählt aus der Gruppe, bestehend aus essentiellem Öl von Capsicum annum L., essentiellem Öl von Allium sativum L., essentiellem Öl von Zingiber officinale und essentiellem Öl von Allium capa.

3. Nano-Emulsion nach Anspruch 1, wobei das wasserlösliche Biopolymer eines oder mehrere Biopolymere umfasst, ausgewählt aus einer Gruppe, bestehend aus Chitosan, Alginsäure, Cellulose, Carrageenan, Gelatine, Gummi arabicum, Pektin und Guar-Gum.

4. Nano-Emulsion nach Anspruch 1, wobei der Sorbitan-Fettsäureester Tween 60 oder Tween 80 ist.

5. Nano-Partikel, hergestellt durch Lösungsmittelfällung oder Vakuumgefriertrocknung der Nano-Emulsion, hergestellt nach einem der Ansprüche 1-4.

6. Verfahren zum Herstellen einer Einzelschicht-Nano-Emulsion, umfassend die Schritte:
Zugeben von 0,03 - 0,3 Gew.% eines essentiellen pflanzlichen Öls und 0,09 - 1,5 Gew.% eines Sorbitan-Fettsäureesters zu 0,05 - 1,0 Gew.% eines wasserlöslichen Biopolymers;
Zugeben von Wasser auf 100%; und
Umwandeln der Mischung zu einer Nano-Emulsion.

7. Verfahren zum Herstellen einer Doppelschicht-Nano-Emulsion, umfassend die Schritte:
Zugeben von 0,03 - 0,3 Gew.% essentiellem pflanzlichem Öl und 0,09 - 1,5 Gew.% Sorbitan-Fettsäureester zu 0,05 - 1,0 Gew.% wasserlöslichem Biopolymer;
Zugeben von Wasser auf 100%;
Zugeben von Calciumchlorid zu der Mischung;
Umwandeln der Mischung, zu der das Calciumchlorid zugegeben worden ist, zu einer Nano-Emulsion;
Zugeben von 0,05 - 1,5 Gew.% eines weiteren wasserlöslichen Biopolymers zu der Nano-Emulsion und dann Umwandeln davon zu einer Nano-Emulsion; und
Trennen der Emulsionen mit Nano-Größe durch Zentrifugieren der Nano-Emulsion.

8. Verfahren zum Herstellen einer Tripelschicht-Nano-Emulsion, umfassend die Schritte:
Zugeben von 0,03 - 0,3 Gew.% essentiellem pflanzlichem Öl und 0,09 - 1,5 Gew.% Sorbitan-Fettsäureester zu 0,05 - 1,0 Gew.% wasserlöslichem Biopolymer;
Zugeben von Wasser auf 100%;
Zugeben von Calciumchlorid zu der Mischung;
Umwandeln der Mischung, zu der Calciumchlorid zugegeben worden ist, zu einer Nano-Emulsion;
Zugeben von 0,05 - 1,0 Gew.% eines weiteren wasserlöslichen Biopolymers zu der Nano-Emulsion und dann Umwandeln davon zu einer Nano-Emulsion;
Zugeben von 0,05 - 1,0 Gew.% eines weiteren wasserlöslichen Biopolymers zu der Nano-Emulsion und dann Umwandeln davon zu einer Nano-Emulsion; und
Trennen der Emulsionen mit Nano-Größe durch Zentrifugieren der Nano-Emulsion.

9. Nano-Partikel, hergestellt durch Durchführen einer Lösungsmittelfällung oder mittels Vakuumgefriertrocknung der Nano-Emulsion, hergestellt nach einem der Ansprüche 6 bis 8.

## Revendications

1. Nanoémulsion comprenant de 0,03 à 0,3 % en poids d'huile essentielle de plante, de 0,09 à 1,5 % en poids d'ester d'acide gras de sorbitan, de 0,05 à 1,0 % en poids d'un biopolymère soluble dans l'eau, le reste étant de l'eau, relativement au poids total de la nano émulsion.

2. Nanoémulsion selon la revendication 1, dans laquelle l'huile essentielle de plante comprend une ou plusieurs huile(s) essentielle(s) choisies dans le groupe constitué par l'huile essentielle de capsicum annum L., l'huile essentielle d'Allium sativum L., l'huile essentielle de Zingiber officinale, et l'huile essentielle d'Allium capa.

3. Nanoémulsion selon la revendication 1, dans laquelle le biopolymère soluble dans l'eau comprend un ou plusieurs éléments choisis dans un groupe constitué par le chitosan, l'acide alginique, la cellulose, la carraghénine, la gélatine, la gomme arabique, la pectine, et la gomme de guar.

4. Nanoémulsion selon la revendication 1, dans laquelle l'ester d'acide gras de sorbitan est le Tween 60 ou le Tween 80.

5. Nanoparticule préparée par réalisation d'une précipitation au solvant ou d'une lyophilisation sous vide de la nanoémulsion préparée selon l'une quelconque des revendications 1 à 4.

6. Procédé de production d'une nanoémulsion monocouche qui comprend les étapes consistant à :
ajouter de 0,03 à 0,3 % en poids d'huile essentielle de plante et de 0,09 à 1,5 % en poids d'ester d'acide gras de sorbitan à 0,05 à 1,0 % en poids d'un biopolymère soluble dans l'eau ;
ajouter le reste d'eau ; et
mettre le mélange sous la forme d'une nanoémulsion.

7. Procédé de production d'une nanoémulsion bicouche qui comprend les étapes consistant à :
ajouter de 0,03 à 0,3 % en poids d'huile essentielle de plante et de 0,09 à 1,5 % en poids d'ester d'acide gras de sorbitan à 0,05 à 1,0 % en poids d'un biopolymère soluble dans l'eau ;
ajouter le reste d'eau ;
ajouter du chlorure de calcium au mélange ;
mettre le mélange auquel le chlorure de calcium est ajouté sous la forme d'une nanoémulsion ;
ajouter de 0,05 à 1,0 % en poids d'un autre biopolymère soluble dans l'eau à la nanoémulsion puis mettre sous la forme d'une nanoémulsion ; et
séparer les émulsions à la taille du nanomètre par centrifugation de la nanoémulsion.

8. Procédé de production d'une nanoémulsion tricouche qui comprend les étapes consistant à :
ajouter de 0,03 à 0,3 % en poids d'huile essentielle de plante et de 0,09 à 1,5 % en poids d'ester d'acide gras de sorbitan à 0,05 à 1,0 % en poids d'un biopolymère soluble dans l'eau ;
ajouter le reste d'eau ;
ajouter du chlorure de calcium au mélange ;
mettre le mélange auquel le chlorure de calcium est ajouté sous la forme d'une nanoémulsion ;
ajouter de 0,05 à 1,0 % en poids d'un autre biopolymère soluble dans l'eau à la nanoémulsion puis mettre sous la forme d'une nanoémulsion ;
ajouter de 0,05 à 1,0 % en poids d'encore un autre biopolymère soluble dans l'eau à la nanoémulsion puis mettre sous la forme d'une nanoémulsion ; et
séparer les émulsions à la taille du nanomètre par centrifugation de la nanoémulsion.

9. Nanoparticule préparée par réalisation d'une précipitation au solvant ou d'une lyophilisation sous vide de la nanoémulsion préparée selon l'une quelconque des revendications 6 à 8.
